# EUROPEAN PATENT SPECIFICATION

(11) **EP 1 011 156 B1**
(45) Date of publication and mention of the grant of the patent: **05.06.2002**
(21) Application number: 99308964.8
(22) Date of filing: 10.11.1999
(51) Int. Cl.: H01M 2/12, H01M 10/40

(54) **Battery cell with a safety valve**
Batterie mit Sicherheitsventil
Accumulateur avec soupape de sûreté

(30) Priority: 10.11.1998 JP 31848598
(43) Date of publication of application: 21.06.2000
(73) Proprietor: Japan Storage Battery Company Limited, Minami-ku Kyoto-shi Kyoto (JP)
(72) Inventor: Yoshida, Hiroaki, Kisshoin, Minami-ku, Kyoto-shi, Kyoto (JP); Inoue, Takefumi, Kisshoin, Minami-ku, Kyoto-shi, Kyoto (JP); Masuda, Hideki, Kisshoin, Minami-ku, Kyoto-shi, Kyoto (JP)
(74) Representative: Carpenter, David

(56) References cited:
- EP-A- 0 333 023
- US-A- 4 175 166
- PATENT ABSTRACTS OF JAPAN vol. 1999, no. 01, 29 January 1999 (1999-01-29) & JP 10 269998 A (SHIN KOBE ELECTRIC MACH CO LTD), 9 October 1998 (1998-10-09)
- PATENT ABSTRACTS OF JAPAN vol. 009, no. 004 (E-288), 10 January 1985 (1985-01-10) & JP 59 154742 A (HITACHI MAXELL KK), 3 September 1984 (1984-09-03)
- PATENT ABSTRACTS OF JAPAN vol. 014, no. 108 (E-0896), 27 February 1990 (1990-02-27) & JP 01 309253 A (ASAHI CHEM IND CO LTD), 13 December 1989 (1989-12-13)

## Description

### BACKGROUND OF THE INVENTION

### Field of the Invention

The present invention relates to a battery cell such as a nonaqueous electrolytic secondary cell in which a wound power-generating element is housed within a cell case, and a battery (multiple-cell set) utilising such cells.

### Description of the Related Art

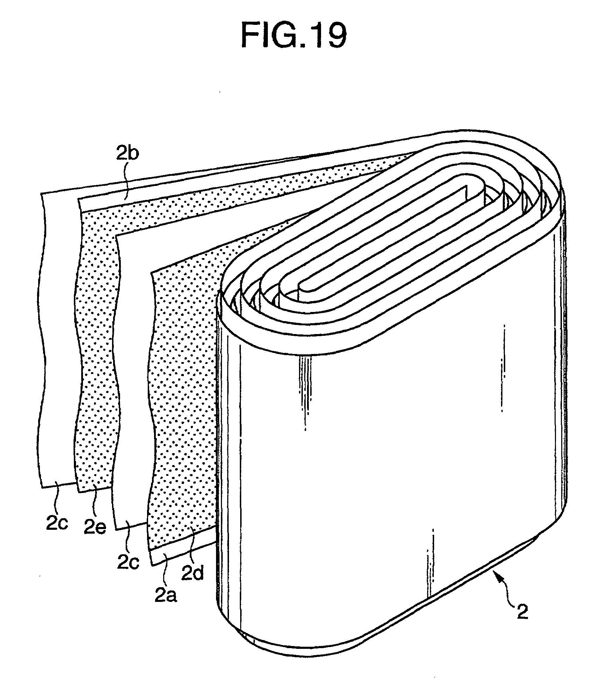

An explanation will be given of a conventional structure of a large-scale large-capacity cylindrical nonaqueous secondary cell 1 of generally oval cross-section. As seen from Fig. 19, a power generating element 2 of the nonaqueous secondary cell includes an electrolytic positive electrode 2a in the form of an elongate strip of aluminium foil and a negative electrode 2b in the form of an elongate strip of copper foil. The strips 2a, 2b are spaced by an elongate separator strip 2c and a second similar separator strip 2c engages the face of the strip 2b remote from the strip 2a. The strips 2a, 2b, 2c are wound to an elliptical-cylindrical form. The positive electrode 2a has an area of a mixture 2d of an active material and binder applied on one surface of the aluminium foil leaving a longitudinally extending edge region of the strip 2a free of the mixture exposing the aluminium foil at the lower end of the wound foil. The negative electrode 2b has an area of a mixture 2e of an active material and binder applied on one surface of a copper foil leaving a longitudinally extending edge region of the strip 2b free of the mixture exposing the copper foil at the upper end of the wound foil. The positive electrode 2a and a negative electrode 2b are wound in a manner displaced axially of the wound element 2 so that the exposed lower end of the positive. electrode 2a protrudes downward and the exposed upper end of the negative electrode 2b protrudes upward.

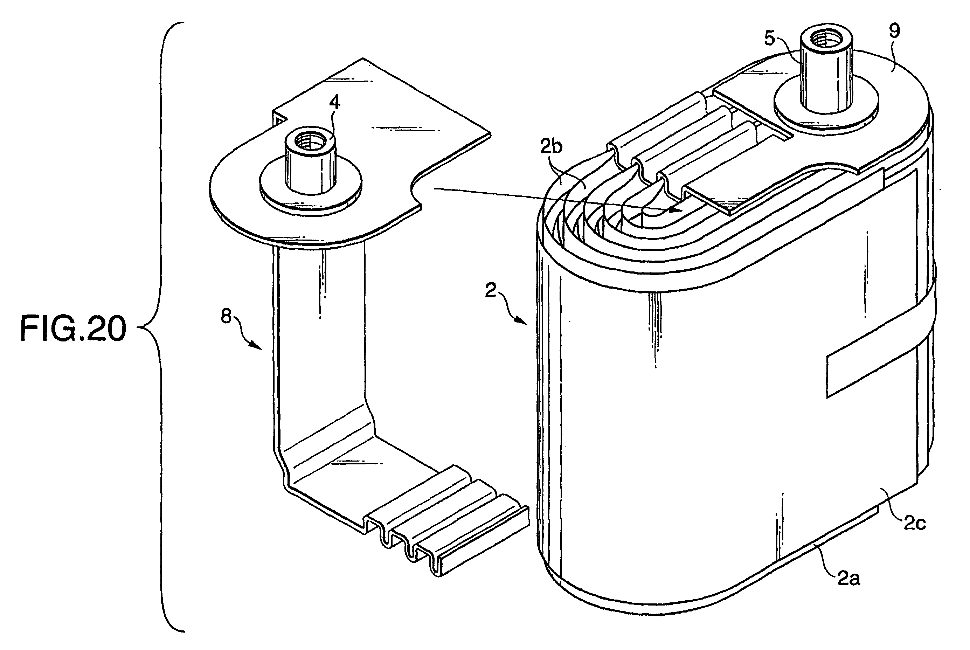

As seen from Fig. 20, a negative electrode collector 9 is fixedly connected to the protruding upper end of the negative electrode 2b of the power generating element 2. The negative electrode collector 9 is made by stamping a copper alloy plate to form an elongated spiral groove therein, the groove in use receiving the exposed, protruding upper edge of the negative electrode 2b, the electrode being fixedly connected in the respective groove by clamping or welding. A negative electrode terminal 5 of copper alloy is fixedly connected to the negative electrode collector 9 by clamping or welding so that it protrudes upward. A positive electrode collector 8 is fixedly connected to the downwardly protruding lower end of the positive electrode 2a of the power generating element 2. The positive electrode collector 8 is formed, and connected to the electrode 2a as described above in relation to collector 9 except that collector 8 is formed from aluminium. One end of the positive electrode collector 8 is extended axially of the element 2 to terminate generally co-planer with the collector 9 and a positive electrode terminal 4 of aluminium alloy is fixedly connected to the positive electrode collector 8 by clamping or welding.

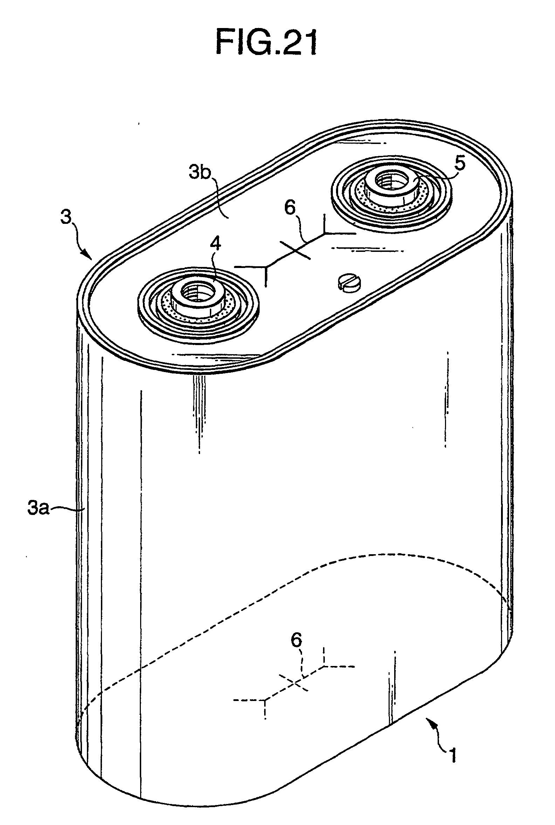

The power generating element 2 is housed within a cell case 3 as shown in Fig. 21. The cell case 3 is made of sheet aluminium alloy or stainless steel, and comprises a case body 3a of a generally oval cylindrical cross-section and a generally oval cover plate 3b fitted into an upper opening thereof and sealed thereto by welding at its periphery. The positive electrode terminal 4 and negative electrode terminal 5 which are fixedly connected to the power generating element 2 protrude outwardly through respective holes located in the cover plate 3b and are sealingly electrical insulated from the plate 3 by forming a glass hermetic seal in gaps between themselves and the walls of their respective holes in the plate 3. A metallic ring made of the same material as the cover plate 3b is secured to each of the terminals 4, 5 and electrically insulated therefrom by a respective glass or ceramic hermetic seal. The metallic rings assist in sealing the holes of the cover plate 3b. The cover plate 3b, thereafter, is fitted in the case body 3a and sealed therein by welding.

It will be understood that the term "oval" as used herein is not strictly geometrically accurate as the actual cross-sectional shape of the cylindrical case 3 has a pair of rectilinear parallel sides interconnected at their ends by opposite semi-circular regions.

The nonaqueous electrolytic secondary cell 1 as described above is disadvantageous in that if the power generating element 2 is heated excessively, for example if an abnormality occurs, the electrolyte is decomposed to generate gas whereby the internal pressure is increased such that the cell case 3 may burst. In order to overcome such an inconvenience, it is known to provide safety valves 6 on the bottom of the case body 3a and on the cover plate 3b. The safety valves 6 are formed by thinning regions of case end plates by forming grooves in the aluminium alloy or stainless steel constituting the case body 3a and cover plate 3b. When the pressure within the cell case 3 is boosted abnormally, the grooved thinned areas can rupture, venting gas and so relieving the internal pressure of the cell case.

It should be noted that the gas generated in the power-generating element 2 can move only toward either the upper end or lower end axially of the element 2 because the positive electrode 2a and negative electrode 2b are closely wound. Accordingly, safety valves 6 are formed on the bottom of the case body 3a and on the cover plate 3b so that the gas evolved from the upper and lower ends can be smoothly discharged externally. However, where such an oval cylindrical cell 1 is used as a single cell, the planar portion of the side walls of the case body 3a swells outwardly in response to an increase in internal pressure. Therefore, for example, the gas evolved at the lower end of the power-generating element 2 can be transferred to the upper end around the element 2 by virtue of the swelled sides of the case body 3a. In this case, the safety valve 6 may be formed on only the cover plate 3b at the upper end. However, where a plurality of such cells 1 are closely arranged so that they can be used as a battery, the planar portions of the sides of the adjacent cells abut each other so that the cell cannot swell in response to the internal pressure. Thus, the gas evolved at the lower end of the power generating element 2 cannot migrate to the top end and a safety valve 6 must be also formed on the bottom of the case body 3a.

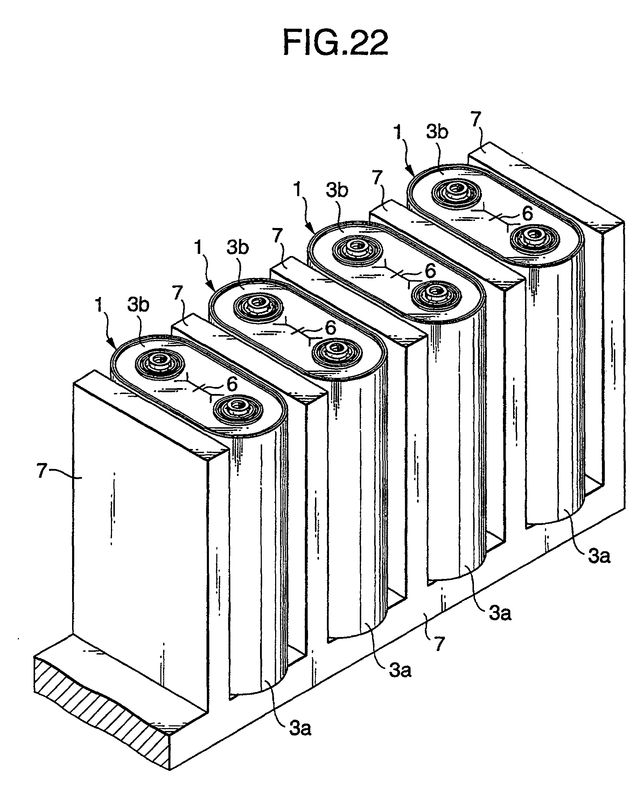

Where the conventional nonaqueous electrolytic secondary cell 1 is used in a battery, it cannot be used satisfactorily if the bottom of the cell where the safety valve 6 is formed is covered. For example, in the case of the battery for a special use such as aeronautics/space, as shown in Fig. 22, a cooling plate 7 of a material having a high thermal conductivity such as an aluminium alloy is arranged between the cells 1 and beneath the bottom of each cell so that the battery can be cooled by a cooling means (not shown). In this case, the planar portion of the side of each nonaqueous secondary cell 1 is restrained by the cooling plate 7 and hence cannot swell, necessitating the safety valve to be formed on the bottom of the case body 3a. However, because the bottom of the case body 3a is also blocked by the cooling plate 7, the safety valve 6 cannot operate normally.

Even where the cell 1 is used as a single cell, if a side wall of the case body 3a cannot swell because the cell is arranged with no gap within an installing space, the safety valve 6 must be formed on the bottom of the case body 3a. In this case also, the cell must be used with the bottom of the cell uncovered if the lower safety valve 6 is to operate satisfactorily.

Where the nonaqueous electrolytic secondary cell is cylindrical and of circular cross-section, the entire side wall of the cell case is curved and has no planar portion. Therefore, even where it is arranged within a sufficient installing space as a single cell, the cylindrical wall of the cell cannot swell. In this case also, the safety valves must be formed on the upper and lower face of the cell case, and hence the cell cannot be used with the bottom of the cell, where the safety valve 6 is formed, covered.

The above disadvantages are not restricted to nonaqueous electrolytic secondary cells, but apply also to many constructions of battery which require a safety valve and use a winding type power-generating element.

### Summary Of The Invention

It is an object of the present invention to provide a ventable cell which can be used with the bottom of the cell case covered and a battery using such a cell.

According to the invention, there is provided a battery cell comprising a wound power generating element including first and second electrodes, a cell case housing said element, the cell case being in the form of a hollow cylinder having a curved wall region, and, a safety valve in the wall of said case, said safety valve being provided in said curved region of cell case wall adjacent an axial end of the cell case so as to be proximate an axial end region of at least one of the electrodes of the element, said axial end region including active electrode mixture (2d, 2e).

Accordingly as the safety valve is formed at one end of the curved region of the side wall of the cell case, even where the one end surface of the battery is covered, gas evolved at the end of the power generating element can be smoothly discharged externally. A safety valve may be formed at each end of the curved side wall of the cell case.

Conveniently said power generating element is wound to have a generally oval cross-section, and the cell case is of a generally oval cylindrical form.

It will be recognised that even where the planar portion of the side wall is restrained so that it cannot swell, the inner gas can be smoothly discharged horizontally.

Desirably the axial length of the cell is at least 1.5 times the width of the cell at its narrowest point.

Preferably the valve comprises a weakened area of said curved wall region.

Conveniently the weakened region extends axially of the cell case.

Preferably one edge region of each electrode is free of active electrode mixture and protrudes from a respective axial end region of said element.

The invention further resides in a battery utilising a plurality of such cells arranged with said one axial end thereof lowermost, and a cooling plate abuting said one axial end of said cells and extending between adjacent cells. Thus, even where the side and bottom of the cell case of each of the batteries are blocked by the cooling plate of the battery, since the safety valve is formed adjacent the axial end of the side wall of each cell case, the gas evolved at the axial end of the power generating element can be smoothly discharged externally.

### Brief Description of the Drawings

In the accompanying drawings:
Fig. 1 is an overall perspective view of a nonaqueous electrolytic battery according to an embodiment of the present invention;
Fig. 2 is a partially enlarged longitudinal sectional view showing a structure in the vicinity of the lower end of the nonaqueous secondary cell;
Fig. 3 is a longitudinal sectional view of the cell of Fig. 1;
Fig. 4 is a perspective view of a battery composed of the cells of Fig. 1;
Fig. 5 is an overall perspective view of a nonaqueous secondary cell showing a second example of a groove shape of a safety valve according to an embodiment of the present invention;
Fig. 6 is a side view of the cell of Fig 5;
Figs. 7 and 8, 9 and 10, 11 and 12, 13 and 14, 15 and 16, and 17 and 18 are views similar to Figs. 5 and 6 respectively of alternative groove shapes of the safety valve of the cell;
Fig. 19 is a perspective view showing the structure of a conventional power generating element;
Fig. 20 is a perspective view of the power generating element of Fig. 19 together with electrode collectors and terminals;
Fig. 21 is an overall perspective view of a conventional nonaqueous electrolytic secondary cell; and
Fig. 22 is a perspective view of a battery and cooling arrangement using cells of the kind shown in Fig. 21.

### Preferred Embodiments of the Invention

Now referring to the drawings, an explanation will be given of embodiments of the present invention.

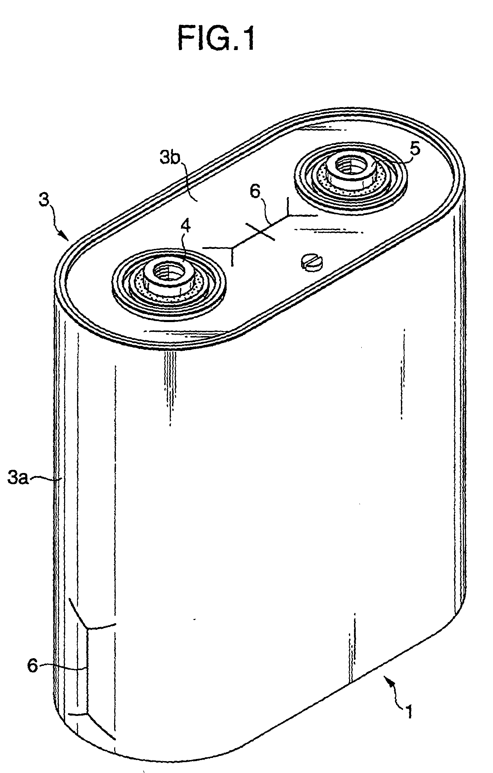

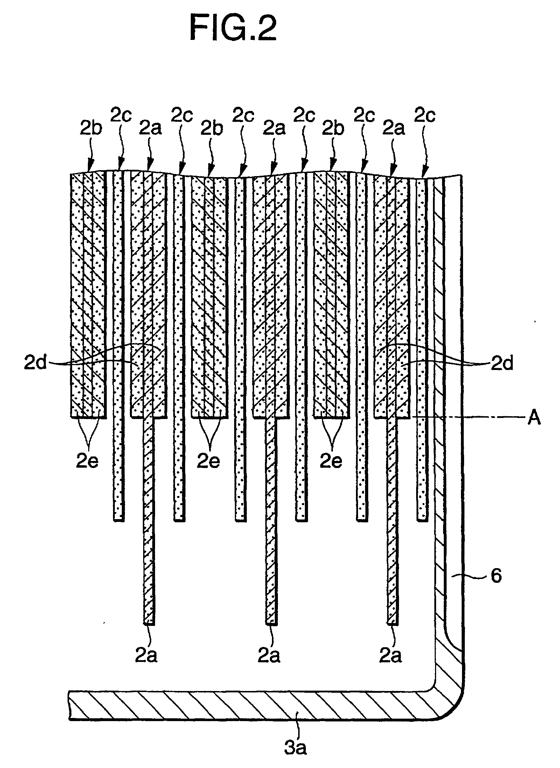

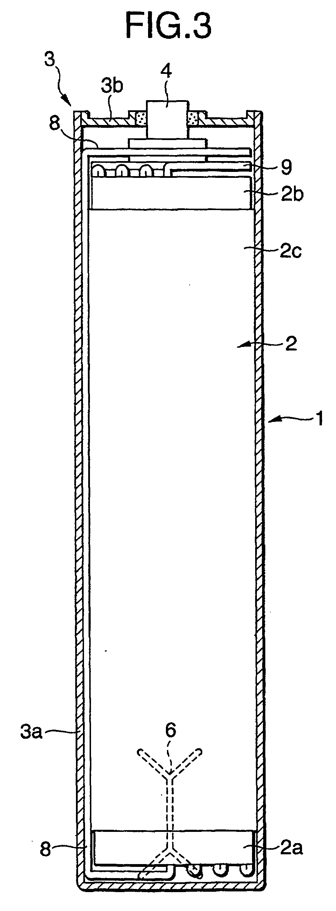

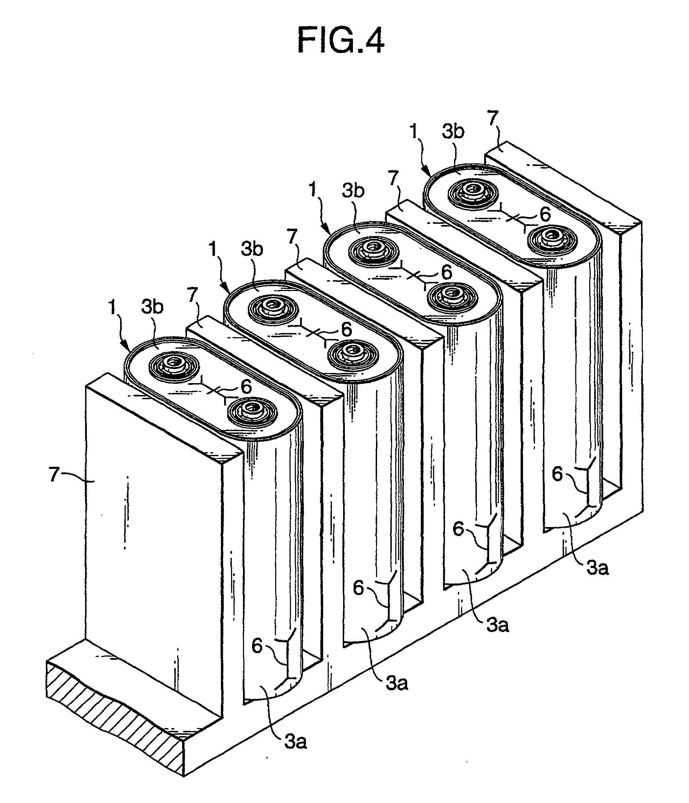

Figs. 1 to 4 show a first embodiment of the present invention. Specifically, Fig. 1 is an overall perspective view of a nonaqueous electrolytic cell. Fig. 2 is a partially enlarged longitudinal sectional view showing a structure in the vicinity of the lower end of the nonaqueous secondary cell. Fig. 3 is a longitudinal sectional view showing an internal structure of the nonaqueous electrolytic secondary cell. Fig. 4 is a perspective view of a battery composed of a plurality of nonaqueous electrolytic secondary cells. In Figs. 1 to 4, the same reference numerals refer to the same elements in the conventional arts shown in Figs. 19 to 22.

This embodiment will be explained in connection with a nonaqueous electrolytic secondary cell 1 provided with a power generating element 2 which is wound in a generally oval (running track-shaped) cylindrical form like the conventional element as shown in Figs. 19 to 22. As seen from Fig. 1, a cell case body 3 of the nonaqueous electrolytic secondary cell 1 is made from aluminium alloy or stainless steel sheet, and is composed of a case body 3a of hollow, oval cylindrical form and an oval cover plate 3b fitted in the upper opening of the body 3a and sealed around its periphery by laser welding or TIG welding. The power generating element 2 as shown in Figs. 19 to 20 is housed within the cell case 3. The positive electrode terminal 4 and negative electrode terminal 5 which are fixedly connected to the power generating element 2 are caused to protrude upwards through the opening holes located at respective positions in the cover plate 3b. The electrode terminals 4 and 5 are dielectrically sealed by forming a glass hermetic seal therearound. Alternatively the positive electrode terminal 4 and negative electrode terminal 5 can be dielectrically fixedly sealed in the cover plate 3b by means of a ceramic hermetic seal or screwing a packing material of synthetic resin.

The cover plate 3b has a safety valve formed at its central area like the conventional cell. The case body 3a has another safety valve 6 formed at the lower end of its curved side wall. These safety valves 6 are provided by areas of the curved side wall of the body 3a and the cover plate 3b, thinned by forming grooves in the aluminium alloy or stainless steel sheet. The grooves can be formed by cutting, stamping or etching. In the case of cutting, a machine capable of cutting a curved surface such as a three-dimensional NC is required. In the case of stamping, the groove can be formed simultaneously when the case body 3a is drawn and the cover plate 3b is stamped out. However, normally, after these machining operations, the groove is formed by a stamping operation using a mould or die tool having a protrusion corresponding to the groove. In the case of etching, the remaining surface area of case body 3a and cover plate 3b, other than the area where the grooves are to be formed, are covered with a protection film. Thereafter, the grooves are formed by thinning the metallic plate through chemical etching of the unprotected area. The safety valves 6 ensure that, when the pressure within the cell case 3 is raised abnormally, the gas can be vented by the thinned groove areas rupturing so that the inside of the cell case is vented to atmosphere.

The safety valve 6 formed on the curved side wall of the case body 3a is formed so that the lower end of the groove is lower than the lower end position A (Fig. 2) of the area of the element 2 where the mixture 2d of the positive electrode 2a and mixture 2e of the negative electrode 2b are applied. As shown in Fig. 3, since the positive electrode collector 8 for fixing the lower end of the positive electrode 2a is arranged beneath the power generating element 2, a gap is formed between itself and the bottom of the case body 3a. Therefore, gas evolved from the lower end of the power generating element 2 can flow to the lower end of the side wall through the above gap. Thus, if the groove of the safety valve 6 of the case body 3a extends below the lower end of the power generating element 2, the gas can be smoothly discharged externally from the lower end of the side wall of the case body 3a. Further, in the power generating element 2, the separator 2c and the edge area of the positive electrode 2a where the mixture 2d is not applied, and the edge area of the negative electrode 2b where the mixture 2e is not applied do not have rigidity and are relatively flexible, and can be deflect by gas flow in the case body. Thus it is not necessary for the safety valve 6 to be formed in the lower end of the case body. Instead of this, the groove has only to be formed in the side wall extending below the lower end position A of the area where the mixture 2d and mixture 2e are applied in the power generating element 2 as shown in Fig. 2.

In the nonaqueous electrolytic secondary cell 1 having the above configuration, even if the planar side wall regions of the cell case 3 are restrained and the bottom of the cell case 3 is blocked, gas evolved from the lower end of the power generating element 2 in a fault situation can be smoothly vented to atmosphere from the safety valve formed in the curved side wall of the case body 3a. Where the axial length of the power generating element 2 is relatively short gas generated within the power generating element 2 can be discharged from the upper end of the cell case 3a. For this reason, the present invention is particularly efficient for the nonaqueous electrolytic secondary cell 1 having a height that is at least 1.5 times the narrowest width of the oval cylindrical shape, or the diameter of the cylindrical shape where the case is circular cylindrical.

In the embodiment shown in Fig. 4, a plurality of the nonaqueous electrolytic secondary cells 1 are arranged to constitute a battery. A cooling plate 7 is closely arranged between the adjacent nonaqueous electrolytic secondary cells and beneath the bottom of these cells. Thus, the planar portions of the side wall of each of the nonaqueous electrolytic secondary cells 1 are restrained by the cooling plate 7 and cannot swell in response to gas evolved in a fault situation. Accordingly if such a fault occurs it is impossible for the gas evolved at the lower end of the generating element 2 to flow to the outer end thereof to be vented by the safety valve formed on the cover plate 3b. Since the bottom of the case body 3a is also blocked by the cooling plate 7, the safety valve 6 cannot be formed there. However, in the nonaqueous electrolytic secondary cell 1 according to this embodiment, the safety valve 6 is formed at the lower end of the curved side wall of the case body 3a so that the high pressure gas can be vented from the safety valve 6 through the gap at the bottom of the case body 3a.

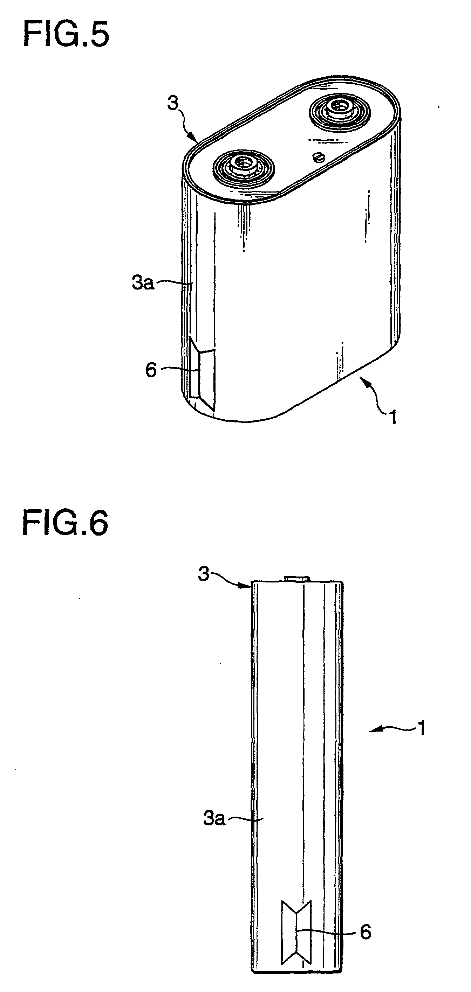

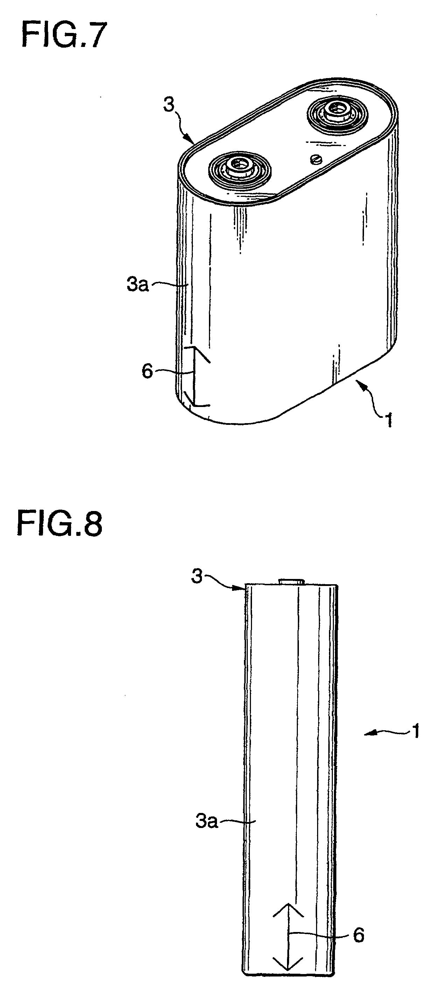

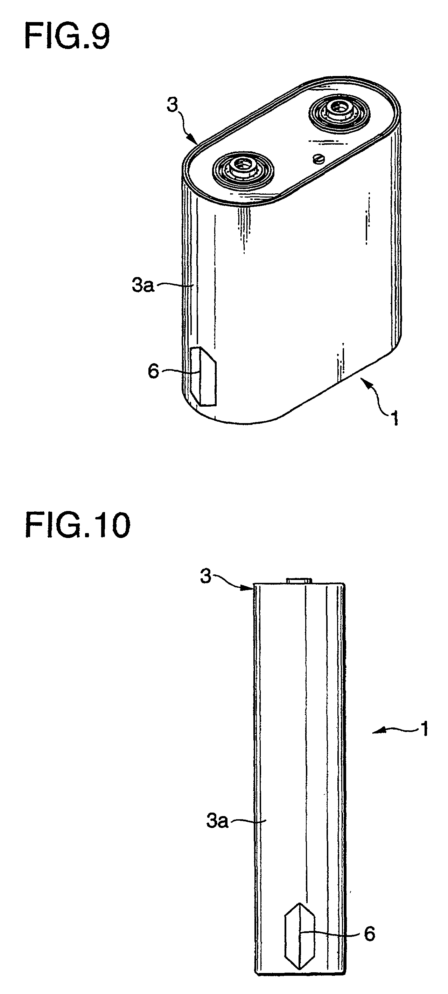

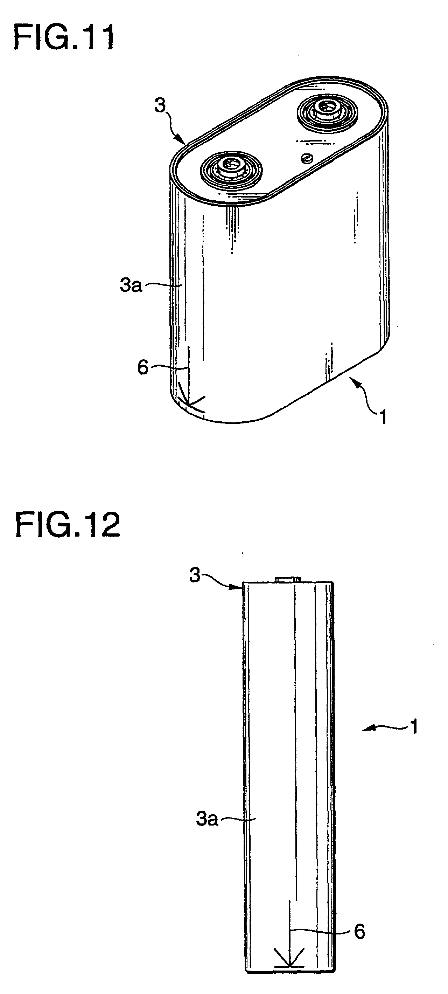

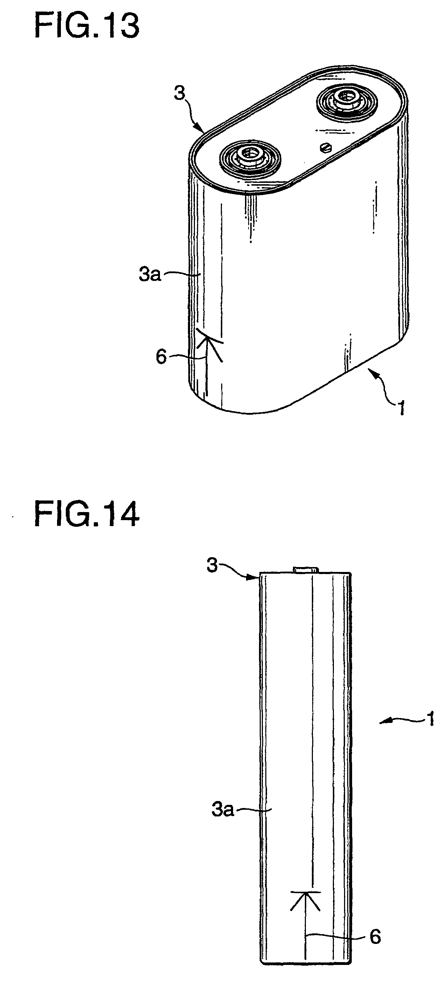

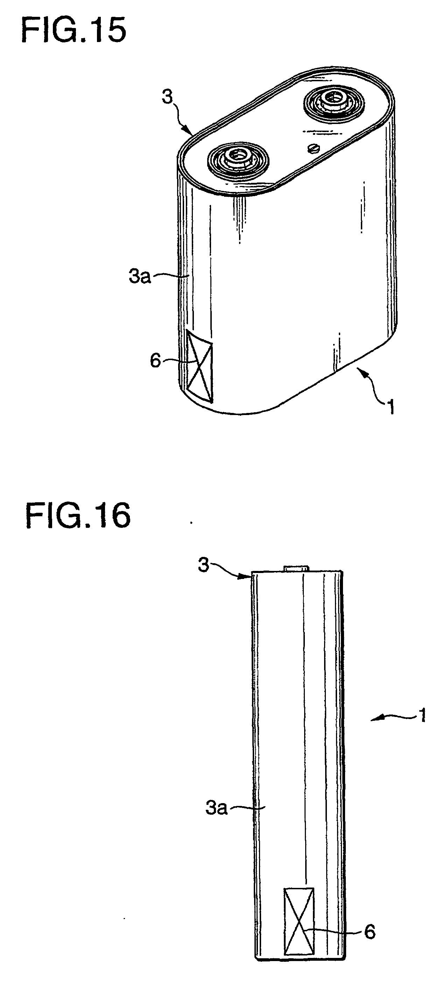

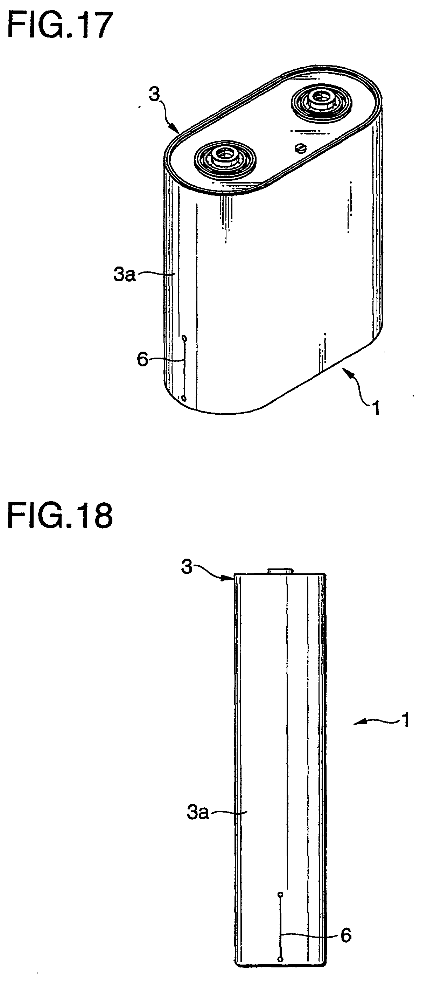

In this embodiment, the safety valve 6 was formed to have a groove shape of a vertical connection of a "Y" groove and an inverted "Y" groove as a first example. However, the groove shape is not limited to such a shape provided it can be reliably ruptured under prescribed pressure or higher. For example, the following shapes of the safety valve 6 are possible. In the second example as shown in Figs. 5 and 6, two vertical grooves are formed on both sides of the vertical connection of a "Y" groove and an inverted "Y" groove. In the third example as shown in Figs. 7 and 8, the groove shape is formed in a vertical connection of an upward arrow groove and downward arrow groove. In the fourth example as shown in Figs. 9 and 10, two vertical grooves are formed on both sides of the vertical connection of an upward arrow groove and a downward arrow groove as shown in Figs. 7 and 8. In the fifth example as shown in Figs. 11 and 12, the groove shape is composed of a groove of a downward arrow and a horizontal groove connected to the lower end thereof. In the sixth example as shown in Figs. 13 and 14, the groove shape is composed of an upward arrow groove and a horizontal groove connected to the upper end thereof. In the seventh example as shown in Figs. 15 and 16, the groove shape is composed of a square groove and diagonal line grooves added thereto. In the eighth example as shown in Figs. 17 and 18, the groove shape is composed of a single vertical groove and indentations added to the upper and lower ends thereof each having a slightly larger diameter than the width of the vertical groove.

The safety valve 6 could alternatively be provided by bonding a metallic plate on an opening formed in the case body 3a and cover plate 3b, by laser welding, to seal the hole in a rupturable manner, or by attaching a pressure valve of an elastic material to the opening.

In the above embodiments, although the present invention was applied to the nonaqueous electrolytic secondary cell 1, it may be applied to any cell as long as it has a wound type power generating element 2. Furthermore, although in the above embodiment the cell cross-section is generally oval, the invention may be applied to a circular cylindrical type of a cell. Moreover, in the above embodiment, although the safety valve 6 was provided only at the lower end of the side wall of the cell, it may be provided at the upper end of the side wall. In this case, the safety valve on the cover plate 3b is not required. Further, where the upper end surface of the battery is closed, the safety valve 6 may be provided at only the upper end of the side wall of the battery.

In the above embodiments, although the cell case 3 was composed of the case body 3a and cover plate 3b, other case constructions may utilise the invention.

As apparent from the above description, in a cell according to the present invention and a battery using such a cell, the safety valve is formed at the end of the side wall of the cell case. Therefore, even where the end surface of the cell is blocked, the gas generated within the cell case can be vented.

## Claims

1. A battery cell comprising a wound power generating element (2) including first and second electrodes (2a, 2b), a cell case (3) housing said element (2), the cell case being in the form of a hollow cylinder having a curved wall region, and, a safety valve (6) in the wall of said case (3), the cell being **characterised in that** said safety valve (6) is provided in said curved region of cell case wall (3a) adjacent an axial end of the cell case so as to be proximate an axial end region of at least one of the electrodes (2a, 2b) of the element (2), said axial end region including active electrode mixture (2d, 2e).

2. A cell as claimed in Claim 1, **characterised in that** said power generating element (2) is wound to have a generally oval cross-section, and the cell case (3) is of a generally oval cylindrical form.

3. A cell as claimed in Claim 2, **characterised in that** the axial length of the cell is at least 1.5 times the width of the cell at its narrowest point.

4. A cell as claimed in any one of Claims 1 to 3, **characterised in that** said valve (6) comprises a weakened area of said curved wall region.

5. A cell as claimed in Claim 4, **characterised in that** said weakened region extends axially of the cell case.

6. A cell as claimed in any one of the preceding claims, **characterised in that** one edge region of each electrode is free of active electrode mixture (2d, 2e) and protrudes from a respective axial end region of said element (2).

7. A battery **characterised by** comprising a plurality of the cells according to any one of the preceding claims, each arranged with said one axial end thereof lowermost, and a cooling plate (7) abutting said one axial end of said cells and extending between adjacent cells.

## Patentansprüche

1. Batteriezelle, die aufweist: ein gewickeltes Stromerzeugungselement (2), das erste und zweite Elektroden (2a, 2b) umfaßt; ein Zellengehäuse (3), das das Element (2) aufnimmt, wobei das Zellengehäuse in der Form eines hohlen Zylinders mit einem gebogenen Wandbereich vorliegt; und ein Sicherheitsventil (6) in der Wand des Gehäuses (3), wobei die Zelle **dadurch gekennzeichnet ist, daß** das Sicherheitsventil (6) im gebogenen Bereich der Zellengehäusewand (3a) angrenzend an ein axiales Ende des Zellengehäuses so bereitgestellt wird, daß es in unmittelbarer Nähe eines axialen Endbereiches von mindestens einer der Elektroden (2a, 2b) des Elementes (2) ist, wobei der axiale Endbereich eine aktive Elektrodenmischung (2d, 2e) umfaßt.

2. Zelle nach Anspruch 1, **dadurch gekennzeichnet, daß** das Stromerzeugungselement (2) so gewickelt ist, daß es einen im allgemeinen ovalen Querschnitt aufweist, und daß das Zellengehäuse (3) im allgemeinen eine ovale, zylindrische Form aufweist.

3. Zelle nach Anspruch 2, **dadurch gekennzeichnet, daß** die axiale Länge der Zelle mindestens das 1,5-fache der Breite der Zelle an ihrer schmalsten Stelle beträgt.

4. Zelle nach einem der Ansprüche 1 bis 3, **dadurch gekennzeichnet, daß** das Ventil (6) einen abgeschwächten Bereich des gebogenen Wandbereiches aufweist.

5. Zelle nach Anspruch 4, **dadurch gekennzeichnet, daß** sich der abgeschwächte Bereich axial vom Zellengehäuse erstreckt.

6. Zelle nach einem der vorhergehenden Ansprüche, **dadurch gekennzeichnet, daß** ein Randbereich einer jeden Elektrode frei von der aktiven Elektrodenmischung (2d, 2e) ist und aus einem entsprechenden axialen Endbereich des Elementes (2) vorsteht.

7. Batterie, **dadurch gekennzeichnet, daß** sie aufweist: eine Vielzahl von Zellen nach einem der vorhergehenden Ansprüche, wobei jede so angeordnet ist, daß das eine axiale Ende davon zu unterst ist; und eine Kühlplatte (7), die an das eine axiale Ende der Zellen anstößt und sich zwischen benachbarten Zellen erstreckt.

## Revendications

1. Accumulateur ayant un élément enroulé (2) générateur d'énergie, comprenant une première et une seconde électrode (2a, 2b), un boîtier (3) d'accumulateur logeant ledit élément (2), le boîtier d'accumulateur étant sous forme d'un cylindre creux ayant une région de paroi courbe, et une soupape de sécurité (6) placée dans la paroi du boîtier (3), l'accumulateur étant **caractérisé en ce que** la soupape de sécurité (6) est placée dans la région courbe de la paroi (3a) du boîtier d'accumulateur près d'une extrémité axiale du boîtier d'accumulateur afin qu'elle soit proche d'une région d'extrémité axiale de l'une au moins des électrodes (2a, 2b) de l'élément (2), la région d'extrémité axiale comprenant un mélange actif d'électrode (2d, 2e).

2. Accumulateur selon la revendication 1, **caractérisé en ce que** l'élément (2) générateur d'énergie est enroulé à une section générale ovale, et le boîtier d'accumulateur (3) a une forme de cylindre de forme générale ovale.

3. Accumulateur selon la revendication 2, **caractérisé en ce que** la longueur axiale de l'accumulateur est au moins égale à 1,5 fois la largeur de l'accumulateur à son point le plus étroit.

4. Accumulateur selon l'une quelconque des revendications 1 à 3, **caractérisé en ce que** la soupape (6) comporte une région affaiblie de la région de paroi courbe.

5. Accumulateur selon la revendication 4, **caractérisé en ce que** la région affaiblie s'étend dans la direction axiale du boîtier d'accumulateur.

6. Accumulateur selon l'une quelconque des revendications précédentes, **caractérisé en ce qu'**une région de bord de chaque électrode est dépourvue de mélange actif d'électrode (2d, 2e) et dépasse d'une région d'extrémité axiale respective de l'élément (2).

7. Batterie **caractérisée en ce qu'**elle comprend plusieurs accumulateurs selon l'une quelconque des revendications précédentes, disposés chacun avec sa première extrémité axiale en position la plus basse, et une plaque (7) de refroidissement qui est en butée contre cette première extrémité axiale des accumulateurs et qui s'étend entre des accumulateurs adjacents.
